# EUROPEAN PATENT APPLICATION

(11) **EP 4 757 041 A1**
(43) Date of publication of application: **10.06.2026**
(21) Application number: 24909977.1
(22) Date of filing: 05.09.2024
(51) Int. Cl.: H01M 50/35, H01M 50/30, H01M 50/308, H01M 50/213, H01M 50/244, H01M 50/267, H01M 50/269

(54) **ASSEMBLED PRESSURE RELIEF CHANNEL AND BATTERY PACK**

(30) Priority: 27.12.2023 CN 202323591996 U; 27.12.2023 CN 202311824122
(71) Applicant: Eve Energy Co. Ltd., Huizhou, Guangdong 516000 (CN)
(72) Inventor: WENG, Xiaofeng, Huizhou, Guangdong 516000 (CN)
(74) Representative: Berggren Oy
(86) International application number: PCT/CN2024/117175
(87) International publication number: WO 2025/139031

(57) **Abstract**

This application discloses an assembled pressure relief channel including a first pressure relief end plate, a second pressure relief end plate, at least one pressure relief intermediate plate, and pressure relief tubes; a first pressure relief channel with an opening on one side is formed inside the first pressure relief end plate, a second pressure relief channel with an opening on one side is formed inside the second pressure relief end plate; the pressure relief intermediate plate is located between the first pressure relief end plate and the second pressure relief end plate, third pressure relief channels with openings on both sides are formed inside the pressure relief intermediate plate; the pressure relief tubes are connected between the first and second pressure relief channels, as well as between the second and third pressure relief channels, or connected between the first and second pressure relief channels, between the second and third pressure relief channels, as well as between the third and third pressure relief channels.

## Description

This application claims priorities to Chinese Patent Application No. 2023118241228 filed on December 27, 2023, and Chinese Patent Application No. 202323591996.1 filed on December 27, 2023 with the Chinese Patent Office, the contents of which are incorporated herein by reference in their entirety.

### TECHNICAL FIELD

This application relates to the field of pressure relief channel technologies, and in particular to an assembled pressure relief channel and a battery pack.

### BACKGROUND

Pressure relief channels in an existing battery pack are all designed on a cast aluminium housing. When battery cells are depressurized, pressure relief channels are formed inside a hollow beam structure of the cast aluminium housing. As the demand for electrical energy increases, a single-layer battery pack often fails to provide sufficient battery capacity, leading to the development and production of a double-layer or multi-layer battery pack.

### SUMMARY

### Technical Problem

In terms of battery cells arranged in multiple layers, a cast aluminium housing in related technologies fails to meet pressure relief requirements for multi-layer battery cells.

### Technical Solution

According to a first aspect, this application provides an assembled pressure relief channel including a first pressure relief end plate, a second pressure relief end plate, at least one pressure relief intermediate plate, and pressure relief tubes; a first pressure relief channel with an opening on one side is formed inside the first pressure relief end plate; a second pressure relief channel with an opening on one side is formed inside the second pressure relief end plate; the pressure relief intermediate plate is located between the first pressure relief end plate and second pressure relief end plate; third pressure relief channels with openings on both sides are formed inside the pressure relief intermediate plate; the pressure relief tubes are connected between the first pressure relief channel and the second pressure relief channel, as well as between the second pressure relief channel and the third pressure relief channel, or the pressure relief tubes are connected between the first pressure relief channel and the second pressure relief channel, between the second pressure relief channel and the third pressure relief channels, as well as between the third pressure relief channel and the third pressure relief channel.

According to a second aspect, this application provides a battery pack including a battery case, several battery cells, and assembled pressure relief channels located inside the battery case. The battery cells are arranged between the first pressure relief channel and the second pressure relief channel, as well as between the second pressure relief channel and the third pressure relief channel in sequence, or the pressure relief tubes are connected between the first pressure relief channel and the second pressure relief channel, between the second pressure relief channel and the third pressure relief channel, as well as between the third pressure relief channel and the third pressure relief channel, and electrode terminals of the battery cells face towards first pressure relief openings, second pressure relief openings, or third pressure relief openings.

### Beneficial Effects

1. The pressure relief channels are constructed in an assembled manner, the number of the pressure relief intermediate plates can be adjusted according to the number of layers of the battery cells, so that the assembled pressure relief channels can be adapted to different types of battery pack, greatly enhancing the practicality of the pressure relief channels.
2. The first pressure relief end plate, at least one pressure relief intermediate plate, and the second pressure relief end plate are connected in sequence from one side to the other side to form an accommodation space with at least two layers for the battery cells, thereby meeting pressure relief requirements for multi-layer battery cells.

### BRIEF DESCRIPTION OF THE DRAWINGS

Figure 1 is a schematic diagram of an assembled structure with one pressure relief intermediate plate according to embodiments of this application;
Figure 2 is a schematic diagram of an assembled structure with two pressure relief intermediate plates according to embodiments of this application;
Figure 3 is a schematic cross-sectional view of a structure along an axial direction of a pressure relief tube according to embodiments of this application;
Figure 4 is a schematic three-dimensional diagram of a structure connected to a pressure relief valve connector according to embodiments of this application;
Figure 5 is a schematic diagram of an assembled structure of some battery cells according to embodiments of this application.

In the drawings, the reference numerals are as follows: 1, first pressure relief end plate; 11, first pressure relief surface; 111, first pressure relief connection hole; 112, first pressure relief opening; 12, first connection part; 2, second pressure relief end plate; 21, second pressure relief surface; 211, second pressure relief connection hole; 212, second pressure relief opening; 22, second connection part; 3, pressure relief intermediate plate; 31, first intermediate plate pressure relief surface; 311, third pressure relief connection hole; 312, third pressure relief opening; 32, second intermediate plate pressure relief surface ; 33, intermediate plate connection part; 4, pressure relief tube; 5, first pressure relief channel; 6, second pressure relief channel; 7, third pressure relief channel; 71, partition plate; 8, pressure relief valve connector; 9, battery cell.

### DETAILED DESCRIPTION OF THE PREFERRED EMBODIMENTS

To facilitate the understanding of the embodiments of the invention, the following description will be further explained with reference to the accompanying drawings. The embodiments do not limit the invention.

In the description of the invention, it should be noted that the terms "upper", "lower", "front", "rear", "left", "right", "vertical", "horizontal", "top", "bottom", "inner", "outer", etc., indicate orientation or positional relationship based on orientation or positional relationship shown in the drawings, and are only for the convenience of describing the invention and simplifying the description, rather than indicating or implying that the device or element referred to must have a specific orientation, be constructed and operated in a specific orientation, and therefore should not be construed as a limitation to the invention.

Unless otherwise specified, all technical and scientific terms used herein have the same meanings as commonly understood by those skilled in the technical field of the invention. The terms used in the specification of the invention are for the purpose of describing specific embodiments only and are not intended to limit the invention.

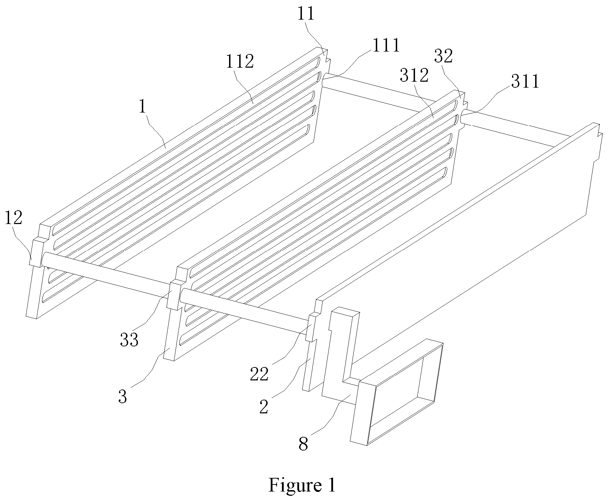

As shown in Figure 1 to Figure 5, a first embodiment of this application discloses an assembled pressure relief channel including a first pressure relief end plate 1, at least one pressure relief intermediate plate 3, and a second pressure relief end plate 2 from one side to another. The first pressure relief end plate 1, at least one pressure relief intermediate plate 3, and the second pressure relief end plate 2 are connected to each other by pressure relief tubes 4. A first pressure relief channel 5 is formed inside the first pressure relief end plate 1, a second pressure relief channel 6 is formed inside the second pressure relief end plate 2, and third pressure relief channels 7 are formed inside the pressure relief intermediate plate 3. The first pressure relief channel 5, the second pressure relief channel 6, and the third pressure relief channels 7 are in communication with each other by the pressure relief tubes 4. No opening is formed in a side, facing way from the pressure relief intermediate plate 3, of the first pressure relief end plate 1; and a side, facing towards the pressure relief intermediate plate 3, of the first pressure relief end plate 1 serves as a first pressure relief surface 11. No opening is formed on a side, facing away from the pressure relief intermediate plate 3, of the second pressure relief end plate 2; and a side, facing towards the pressure relief intermediate plate 3, of the second pressure relief end plate 2 serves as a second pressure relief surface 21. A side, facing towards the first pressure relief end plate 1, of the pressure relief intermediate plate 3 serves as a first intermediate plate pressure relief surface 31; and a side, facing towards the second pressure relief end plate 2, of the pressure relief intermediate plate serves as a second intermediate plate pressure relief surface 32. First pressure relief connection holes 111 in communication with the first pressure relief channel 5 are formed at the first pressure relief surface 11, and the first pressure relief connection holes 111 are in communication with the pressure relief tubes 4. The first pressure relief connection holes 111 are in communication with the first pressure relief channel, so that gas under high temperature and high pressure in the pressure relief channel can be discharged through the first pressure relief connection holes 111 to the pressure relief tubes 4, thereby achieving the discharge of the gas under high temperature and high pressure from the first pressure relief channel. Second pressure relief connection holes 211 in communication with the second pressure relief channel 6 are formed at the second pressure relief surface 21, and the second pressure relief connection holes 211 are in communication with the pressure relief tubes 4. The second pressure relief connection holes 211 are in communication with the second pressure relief channel, so that gas under high temperature and high pressure in the pressure relief channel can be discharged through the second pressure relief connection holes 211 to the pressure relief tubes 4, thereby achieving the discharge of the gas under high temperature and high pressure from the second pressure relief channel. Third pressure relief connection holes 311 in communication with the third pressure relief channels 7 are formed at the first intermediate plate pressure relief surface 31 and the second intermediate plate pressure relief surface 32, and the third pressure relief connection holes 311 are in communication with the pressure relief tubes 4. The third pressure relief connection holes 311 are in communication with the third pressure relief channel, so that gas under high temperature and high pressure in the pressure relief channels can be discharged through the third pressure relief connection holes 311 to the pressure relief tubes 4, thereby achieving the discharge of the gas under high temperature and high pressure from the third pressure relief channels.

The pressure relief tubes 4 are connected between the first pressure relief channel 5 and the second pressure relief channel 6, as well as between the second pressure relief channel 6 and the third pressure relief channel 7, or the pressure relief tubes 4 are connected between the first pressure relief channel 5 and the second pressure relief channel 6, between the second pressure relief channel 6 and the third pressure relief channel 7, as well as between the third pressure relief channel 7 and the third pressure relief channel 7. A connection method of ends of the pressure relief tubes 4 includes but is not limited to sealed insertion, sealed clamping, or welding. In this first embodiment, welding is used to achieve a freely assembled pressure relief channel structure. The construction of the pressure relief channels for battery cells 9 with different layers is realized with different numbers of the pressure relief intermediate plates 3 assembled, which makes the construction more convenient and is adaptable to more sizes of battery packs, thereby allowing for easier adjustment to the number of battery cells 9, and meeting the demand for electrical energy capacity.

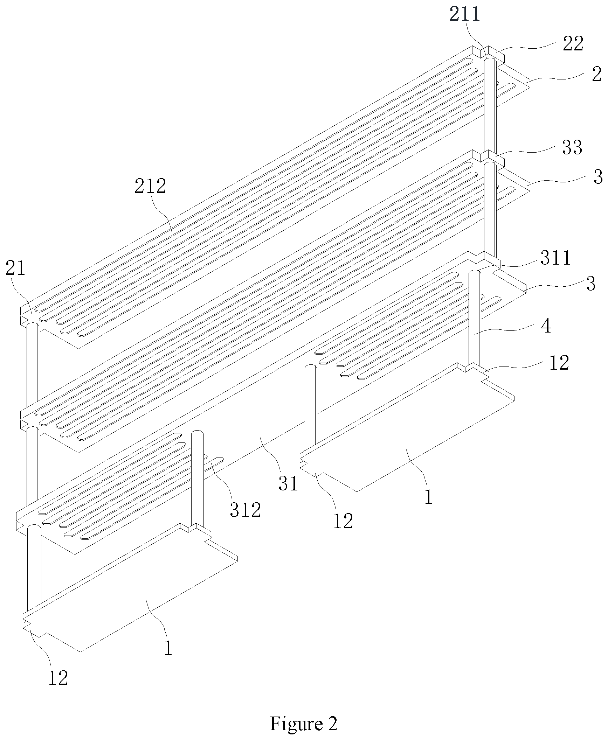

As shown in Figure 2 to Figure 4, multiple first pressure relief openings 112 in communication with the first pressure relief channel 5 are formed at the first pressure relief surface 11 of the first pressure relief end plate 1. Multiple second pressure relief openings 212 in communication with the second pressure relief channel 6 are formed at the second pressure relief surface 21 of the second pressure relief end plate 2. Multiple third pressure relief openings 312 in communication with the third pressure relief channels 7 are formed in the first intermediate plate pressure relief surface 31 and the second intermediate plate pressure relief surface 32. The first pressure relief openings 112, the second pressure relief openings 212, and the third pressure relief openings 312 can be used to receive gas under high temperature and high pressure generated during the pressure relief of the battery cells 9. In this first embodiment, the first pressure relief openings 112, the second pressure relief openings 212, and the third pressure relief openings 312 are in a shape of a strip and arranged parallel to each other. The multiple first pressure relief openings 112 at the first pressure relief surface 11 are arranged in a staggered manner, and/or the multiple second pressure relief openings 212 at the second pressure relief surface 21 are arranged in a staggered manner, and/or the multiple third pressure relief openings 312 at the first intermediate plate pressure relief surface 31 are arranged in a staggered manner, and/or the multiple third pressure relief openings 312 at the second intermediate plate pressure relief surface 32 are arranged in a staggered manner, so that the number of battery cells 9 assembled increases. Thus, the battery cells 9 are assembled in a staggered manner, so that space utilization is maximum. In some embodiments, the first pressure relief openings 112, the second pressure relief openings 212, and the third pressure relief openings 312 can be hole-shaped for assembling each individual battery cell 9, and the hole-shaped openings are arranged in a staggered manner to increase space occupancy rate of the battery cells 9 within a certain space. In some embodiments, the first pressure relief openings 112, the second pressure relief openings 212, and the third pressure relief openings 312 can be in other shapes, as long as they can be used to receive the pressure relief gas from the battery cells 9.

In this first embodiment, as shown in Figure 2 to Figure 4, two first pressure relief end plates 1 are provided, and the two first pressure relief end plates 1 are on a same plane. The two first pressure relief end plates 1 are arranged parallel to an adjacent pressure relief intermediate plate, so that a space for assembling battery cells 9 is formed between each of the first pressure relief end plates 1 and the adjacent pressure relief intermediate plate. A gap between the two first pressure relief end plates 1 is served to provide an avoidance from other components inside the battery pack, typically used to match battery pack structures of different specifications.

In some embodiments, the number of the first pressure relief end plates 1 can be two or more, and the number of the second pressure relief end plates 2 can be two or more. Similarly, the number of the pressure relief intermediate plates in each layer can be two or more. However, the number of at least one of the first pressure relief end plates 1, the pressure relief intermediate plates, and the second pressure relief end plates 2 needs to be one to achieve an integrated connection of the pressure relief channels.

The third pressure relief openings 312 are formed on both sides of the pressure relief intermediate plates, so that a thickness of the pressure relief intermediate plates is not less than a thickness of the first pressure relief end plate 1 and a thickness of the second pressure relief end plate 2, thereby ensuring a smooth flow of the gas under high temperature and high pressure for internal pressure relief.

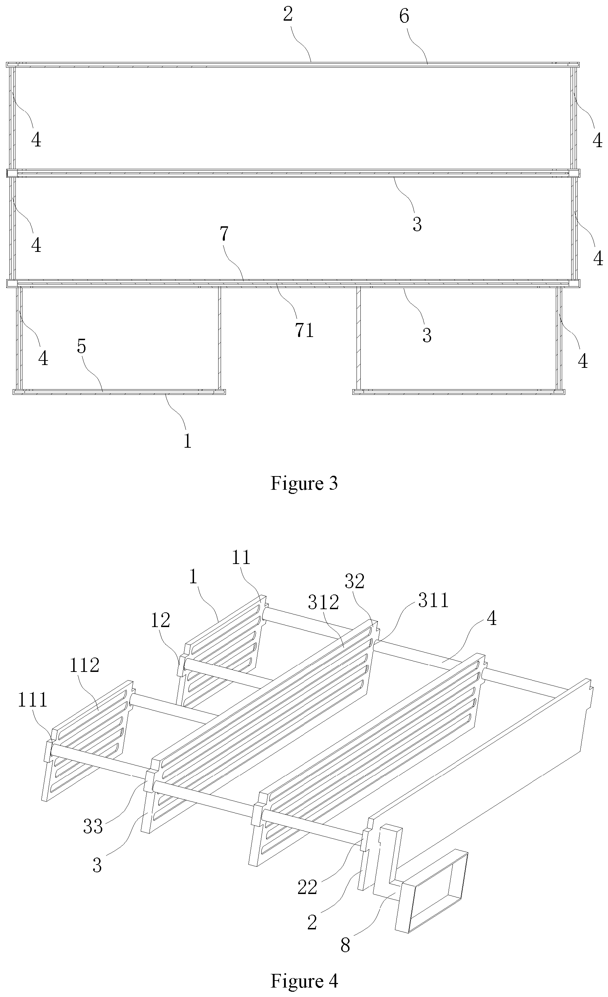

In this first embodiment, as shown in Figure 3, in order to avoid the gas under high temperature and high pressure from being ejected towards another battery cell 9 when the battery cells on both sides of the pressure relief intermediate plate 3 are depressurized, which leads to thermal runaway of other battery cells 9, a partition plate 71 is arranged inside the third pressure relief channel 7. The partition plate 71 is configured to separate the third pressure relief openings 312 at the first intermediate plate pressure relief surface 31 from the third pressure relief openings 312 at the second intermediate plate pressure relief surface 32 so as to effectively avoid thermal runaway caused by mutual impact when the battery cells 9 on both sides of the pressure relief intermediate plate 3 are depressurized.

In some embodiments, as shown in Figure 1 to Figure 5, in order to avoid the pressure relief tubes 4 among the first pressure relief end plate 1, the pressure relief intermediate plate, and second pressure relief end plate 2 from interfering the assembly of the battery cells 9, the first pressure relief end plate 1, the pressure relief intermediate plate, and the second pressure relief end plate 2 are modified. Specifically, two opposite edges of the first pressure relief end plate 1 are extended outward to form first connection parts 12, two opposite edges of the second pressure relief end plate 2 are extended outward to form second connection parts 22, and two opposite edges of the pressure relief intermediate plate 3 are extended outward to form intermediate plate connection parts 33. The first pressure relief connection holes 111 are at least partially located within the first connection parts 12, so as to achieve the discharge of the gas without hindering the assembly of the battery cells 9 on the first pressure relief end plate 1, thereby providing space for the installation of the battery cells 9. The second pressure relief connection holes 211 are at least partially located within the second connection parts 22, so as to achieve the discharge of the gas without hindering the assembly of the battery cells 9 on the second pressure relief end plate 2, thereby providing space for the installation of the battery cells 9. The third pressure relief connection holes 311 are at least partially located within the intermediate plate connection parts 33, so as to achieve the discharge of the gas without hindering the assembly of the battery cells 9 on the pressure relief intermediate plate 3, thereby providing space for the installation of the battery cells 9. Through the above structure, sufficient space is provided for the battery cells 9, and the assembly safety of the battery cells 9 is improved.

As shown in Figure 1, Figure 4, and Figure 5, a pressure relief valve connector 8 is arranged at a side, away from the pressure relief intermediate plate 3, of the first pressure relief end plate 1 and/or the second pressure relief end plate 2. The pressure relief valve connector 8 can be in communication with a pressure relief valve of the battery pack to complete a pressure relief process of the pressure relief channels. In this first embodiment, the pressure relief valve connector 8 is arranged on a surface, away from the pressure relief intermediate plate 3, of the second pressure relief end plate 2. The pressure relief valve connector 8 is sealed and connected to an explosion-proof valve of the battery pack. Therefore, a specific structure of the pressure relief valve connector 8 needs to be adapted to a structure of the corresponding explosion-proof valve of the battery pack. Specifically, the pressure relief valve connector 8 can be welded to the explosion-proof valve through a pressure relief plate, so that the gas under high temperature and high pressure can flow towards the explosion-proof valve when the battery cells are depressurized, thereby improving the safety of the battery pack.

In case that multiple battery cells 9 are suffered from thermal runaway at the same time, excessive gas flow under high temperature and high pressure at high speed is generated. If the pressure relief tubes 4 are directly in communication with the gas flow, the gas flow may directly break through the explosion-proof valve, which causes the gas under high temperature and high pressure or flames to rush out of the battery pack, posing a hazard to items and people outside the battery pack. Therefore, in some embodiments, the third pressure relief connection holes 311 at the first intermediate plate pressure relief surface 31 and the third pressure relief connection holes 311 at the second intermediate plate pressure relief surface 32 are arranged in a staggered manner, which increases the number of turns of the gas flow under high temperature and high pressure in the pressure relief tubes 4 connected to both sides of the pressure relief intermediate plate 3, thereby slowing down the flow rate of the gas flow, and helping to reduce the possibility of the gas flow directly breaking through the explosion-proof valve, thus improving the safety of the battery pack.

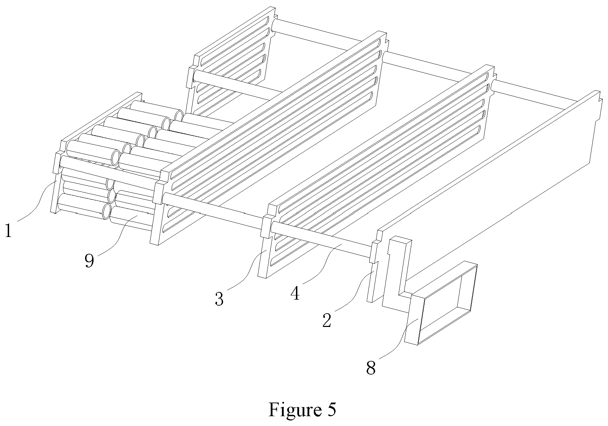

As shown in Figure 5, this application further provides a battery pack including a battery case, several battery cells 9 located within the battery case, and assembled pressure relief channels. The battery cells 9 are arranged between the first pressure relief channel 5 and the second pressure relief channel 6, as well as between the second pressure relief channel 6 and the third pressure relief channel 7, or the pressure relief tubes 4 are connected between the first pressure relief channel 5 and the second pressure relief channel 6, between the second pressure relief channel 6 and the third pressure relief channel 7, as well as between the third pressure relief channel 7 and the third pressure relief channel 7, so that the battery pack is formed into a hierarchical structure with at least two layers. Since openings in communication with the pressure relief channels are formed on both sides of each layer, the battery cells 9 of each layer can also be arranged in two layers. Ends, away from the pressure relief parts, of the two-layer battery cells are arranged opposite to each other, and the pressure relief parts of the two-layer battery cells 9 face towards the openings on both sides, so as to achieve pressure relief into the pressure relief channels. Therefore, terminals of each battery cell 9 can face towards the first pressure relief openings 112, the second pressure relief openings 212, or the third pressure relief openings 213, so that a construction of the pressure relief channels for multi-layer battery cells 9 within the battery pack can be realized, ensuring smooth pressure relief of the battery pack and improving the safety of the battery pack in use.

In summary, the assembled pressure relief channels according to this application achieve the following technical effects:
1. The pressure relief channels are constructed in an assembled manner, the number of the pressure relief intermediate plates 3 can be adjusted according to the number of layers of the battery cells 9, so that the assembled pressure relief channels can be adapted to different types of battery pack, greatly enhancing the practicality of the pressure relief channels.
2. The first pressure relief end plate 1, at least one pressure relief intermediate plate, and the second pressure relief end plate 2 are connected in sequence from one side to the other side to form an accommodation space with at least two layers for the battery cells 9, thereby meeting pressure relief requirements for multi-layer battery cells 9.

## Claims

1. An assembled pressure relief channel, comprising:
a first pressure relief end plate (1), a first pressure relief channel (5) with an opening on one side being formed inside the first pressure relief end plate (1);
a second pressure relief end plate (2), a second pressure relief channel (6) with an opening on one side being formed inside the second pressure relief end plate (2);
at least one pressure relief intermediate plate (3), the pressure relief intermediate plate (3) being located between the first pressure relief end plate (1) and the second pressure relief end plate (2), third pressure relief channels (7) with openings on both sides being formed inside the pressure relief intermediate plate (3); and
pressure relief tubes (4), the pressure relief tubes (4) being connected between the first pressure relief channel (5) and the second pressure relief channel (6), as well as between the second pressure relief channel (6) and the third pressure relief channel (7), or the pressure relief tubes (4) being connected between the first pressure relief channel (5) and the second pressure relief channel (6), between the second pressure relief channel (6) and the third pressure relief channel (7), as well as between the third pressure relief channel (7) and the third pressure relief channel (7).

2. The assembled pressure relief channel according to claim 1, wherein the first pressure relief end plate (1) comprise a first pressure relief surface (11) facing towards the pressure relief intermediate plate (3), and first pressure relief connection holes (111) in communication with the first pressure relief channel (5) are formed at the first pressure relief surface (11), and the first pressure relief connection holes (111) are in communication with the pressure relief tubes (4).

3. The assembled pressure relief channel according to claim 2, wherein two opposite edges of the first pressure relief end plate (1) are extended outward to form first connection parts (12), and the first pressure relief connection holes (111) are at least partially located within the first connection parts (12).

4. The assembled pressure relief channel according to claim 1, wherein the second pressure relief end plate (2) comprises a second pressure relief surface (21) facing towards the pressure relief intermediate plate (3), and second pressure relief connection holes (211) in communication with the second pressure relief channel (6) are formed at the second pressure relief surface (21), and the second pressure relief connection holes (211) are in communication with the pressure relief tubes (4).

5. The assembled pressure relief channel according to claim 4, wherein two opposite edges of the second pressure relief end plate (2) are extended outward to form second connection parts (22), and the second pressure relief connection holes (211) are at least partially located within the second connection parts (22).

6. The assembled pressure relief channel according to any one of claims 1 to 5, wherein the pressure relief intermediate plate (3) comprises a first intermediate plate pressure relief surface (31) facing towards the first pressure relief end plate (1) and a second intermediate plate pressure relief surface (32) facing towards the second pressure relief end plate (2), and the third pressure relief connection holes (311) in communication with the third pressure relief channels (7) are formed at the first intermediate plate pressure relief surface (31) and the second intermediate plate pressure relief surface (32), and the third pressure relief connection holes (311) are in communication with the pressure relief tubes (4).

7. The assembled pressure relief channel according to claim 6, wherein two opposite edges of the pressure relief intermediate plate (3) are extended outward to form intermediate plate connection parts (33), and the third pressure relief connection holes (311) are at least partially located within the intermediate plate connection parts (33).

8. The assembled pressure relief channel according to claim 6, wherein the third pressure relief connection holes (311) at the first intermediate plate pressure relief surface (31) and the third pressure relief connection holes (311) at the second intermediate plate pressure relief surface (32) are arranged in a staggered manner.

9. The assembled pressure relief channel according to any one of claims 2 to 5, wherein a plurality of first pressure relief openings (112) in communication with the first pressure relief channel (5) are formed at the first pressure relief surface (11) of the first pressure relief end plate (1), a plurality of second pressure relief openings (212) in communication with the second pressure relief channel (6) are formed at the second pressure relief surface (21) of the second pressure relief end plate (2), and a plurality of third pressure relief openings (312) in communication with the third pressure relief channels (7) are formed at the first intermediate plate pressure relief surface (31) and the second intermediate plate pressure relief surface (32).

10. The assembled pressure relief channel according to claim 9, wherein a partition plate (71) is arranged inside the third pressure relief channel (7), and the partition plate (71) is configured to separate the third pressure relief openings (312) at the first intermediate plate pressure relief surface (31) from the third pressure relief openings (312) at the second intermediate plate pressure relief surface (32).

11. The assembled pressure relief channel according to claim 9, wherein the first pressure relief openings (112), the third pressure relief openings (312), and the third pressure relief openings (312) are in a shape of a strip and arranged parallel to each other, and the plurality of first pressure relief openings (112) at the first pressure relief surface (11) are arranged in a staggered manner, and/or the plurality of second pressure relief openings (212) at the second pressure relief surface (21) are arranged in a staggered manner, and/or the plurality of third pressure relief openings (312) at the first intermediate plate pressure relief surface (31) are arranged in a staggered manner, and/or the plurality of third pressure relief openings (312) at the second intermediate plate pressure relief surface (32) are arranged in a staggered manner.

12. The assembled pressure relief channel according to any one of claims 1 to 11, wherein a pressure relief valve connector (8) is arranged at a side, away from the pressure relief intermediate plate (3), of the first pressure relief end plate (1) and/or the second pressure relief end plate (2).

13. A battery pack, comprising a battery case, several battery cells (9) located within the battery case and an assembled pressure relief channel according to any one of claims 1 to 12, wherein the battery cells (9) are arranged in sequence between the first pressure relief channel (5) and the second pressure relief channel (6), as well as between the second pressure relief channel (6) and the third pressure relief channel (7), or the pressure relief tubes (4) are connected between the first pressure relief channel (5) and the second pressure relief channel (6), between the second pressure relief channel (6) and the third pressure relief channel (7), as well as between the third pressure relief channel (7) and the third pressure relief channel (7), and terminals of the battery cells (9) face towards first pressure relief openings (112), second pressure relief openings (212), or third pressure relief openings (312).
